# EUROPEAN PATENT APPLICATION

(11) **EP 3 952 525 A1**
(43) Date of publication of application: **09.02.2022**
(21) Application number: 20782781.7
(22) Date of filing: 02.03.2020
(51) Int. Cl.: H04W 72/04, H04L 5/00

(54) **RESOURCE ALLOCATION METHOD AND APPARATUS, STORAGE MEDIUM, AND USER EQUIPMENT**

(30) Priority: 29.03.2019 CN 201910250977
(71) Applicant: Spreadtrum Communications (Shanghai) Co., Ltd., Shanghai 201203 (CN)
(72) Inventor: ZHOU, Huayu, Shanghai 201203 (CN); WANG, Hualei, Shanghai 201203 (CN); XU, Zhikun, Shanghai 201203 (CN); SHEN, Xingya, Shanghai 201203 (CN); PAN, Zhengang, Shanghai 201203 (CN)
(74) Representative: Boult Wade Tennant LLP
(86) International application number: PCT/CN2020/077460
(87) International publication number: WO 2020/199822

(57) **Abstract**

A resource allocation method and apparatus, a storage medium, and a user equipment. The resource allocation method comprises: determining the resource position of a PDCCH monitoring timing in a time slot, the resource position of the PDCCH monitoring timing being selected from a time slot header or a half time slot header; and determining the resource position of a scheduled PDSCH according to at least the resource position of the PDCCH monitoring timing. The technical solution of the present invention can determine the resource position of the PDSCH so as to improve resource utilization rate.

## Description

### CROSS-REFERENCE TO RELATED APPLICATIONS

This application claims priority to Chinese Patent Application No. 201910250977.1, filed on March 29, 2019, and entitled "RESOURCE ALLOCATION METHOD AND APPARATUS, STORAGE MEDIUM, USER EQUIPMENT", the entire disclosure of which is incorporated herein by reference.

### TECHNICAL FIELD

The present disclosure generally relates to communication technology field, and more particularly, to a resource allocation method and apparatus, a storage medium, and user equipment.

### BACKGROUND

In the new radio system of Release 15 (Rel-15), a synchronization signal block (SS/PBCH block, also known as SSB) and the Remaining Minimum System Information (RMSI) physical downlink shared channel (PDSCH) are loosely coupled, and a UE does not obtain the transmission situations of all synchronization signal blocks in an initial access stage. Thus, in the initial access stage, the UE may not perform a rate matching on the RMSI PDSCH around the synchronization Signal Block (SSB). In NR unlicensed spectrum, in general, a synchronization signal block and the RMSI PDSCH are tightly coupled. For example, the synchronization signal block and the RMSI PDSCH multiplexes one slot or half slot, and a UE may obtain transmission situation of the synchronization signal block within the current slot or half slot in a initial access stage. Therefore, in order to improve resource utilization, the UE may perform a rate matching on the RMSI PDSCH around a synchronization signal block in the initial access stage.

However, in a initial access stage of a NR unlicensed spectrum, a problem focuses on a method for performing a rate matching on the RMSI PDSCH around a synchronization signal block by the UE. In addition, a precondition for performing a rate matching on the RMSI PDSCH is a time domain resource allocation for the RMSI PDSCH. Thus, the time domain resource allocation of the RMSI PDSCH should be designed.

### SUMMARY

Embodiments in the present disclosure provide a solution on determining a resource position of a PDSCH to improve the resource utilization.

In an embodiment of the present disclosure, a method for resource allocation is provided, including: determining a resource position of a Physical Downlink Control Channel (PDCCH) monitoring occasion in a slot, the resource position of the PDCCH monitoring occasion is selected from a beginning of the slot or a beginning of a half slot; and determining a resource position of a scheduled Physical Downlink Shared Channel (PDSCH) according to the resource position of the PDCCH monitoring occasion at least.

In some embodiment, said determining a resource position of a PDSCH according to the resource position of the PDCCH monitoring occasion includes: determining an associated synchronization signal block (SS/PBCH block, also known as SSB) according to the resource position of the PDCCH monitoring occasion; and performing a rate matching on the PDSCH around the synchronization signal block.

In some embodiment, said determining a resource position of a PDSCH according to the resource position of the PDCCH monitoring occasion includes: determining an associated synchronization signal block according to the resource position of the PDCCH monitoring occasion; and determining a time-frequency resource in a physical resource block or a resource block overlapping with the synchronization signal block on a symbol transmitting the synchronization signal block, and excluding the determined time-frequency resource on the symbol overlapping with the synchronization signal block from the PDSCH resource; or determining a time-frequency resource in a physical resource block or a resource block overlapping with the synchronization signal block on a symbol to which the PDSCH is allocated, or determining a time-frequency resource of a physical resource block or a resource block overlapping with the synchronization signal block, and excluding the determined time-frequency resource from the PDSCH resource on the symbol overlapping with the synchronization signal block.

In some embodiment, the resource position of the PDCCH monitoring occasion is selected from a beginning of the slot, said determining a resource position of a PDSCH according to the resource position of the PDCCH monitoring occasion at least includes: performing a rate matching on the PDSCH around two synchronization signal blocks, if the number of the PDCCH monitoring occasions is two and the two PDCCH monitoring occasions are respectively associated with the two synchronization signal blocks in the slot.

In some embodiment, a starting symbol of the PDCCH monitoring occasion associated with the first synchronization signal block in the slot is symbol 0 or symbol 1 of the slot, an index of a starting symbol of the PDCCH monitoring occasion associated with the second synchronization signal block in the slot is a duration or a symbol length of a CORESET corresponding to the PDCCH, or the duration or the symbol length of the CORESET corresponding to the PDCCH plus one.

In some embodiment, the resource position of the PDCCH monitoring occasion is selected from a beginning of the slot, said determining a resource position of a PDSCH according to the resource position of the PDCCH monitoring occasion at least includes: performing a rate matching on the PDSCH around two synchronization signal blocks, if the number of the PDCCH monitoring occasion is one, and the PDCCH monitoring occasion is associated with the two synchronization signal blocks in the slot.

In some embodiment, a starting symbol of the PDCCH monitoring occasion is symbol 0 of the slot, symbol 1 of the slot, a duration or a symbol length of a CORESET, the duration or the symbol length of the CORESET plus one.

In some embodiment, the two synchronization signal blocks have a quasi co-location relationship.

In some embodiment, the resource position of the PDCCH monitoring occasion is selected from a beginning of the slot, said determining a resource position of a PDSCH according to the resource position of the PDCCH monitoring occasion at least includes: performing a rate matching on the PDSCH around a single synchronization signal block, if the number of the PDCCH monitoring occasion is one, and the PDCCH monitoring occasion is associated with the single synchronization signal block within the slot.

In some embodiment, a starting symbol of the PDCCH monitoring occasion is symbol 0 of the slot, symbol 1 of the slot, a duration or a symbol length of a CORESET, the duration or the symbol length of CORESET plus one.

In some embodiment, the single synchronization signal block is the first synchronization signal block in the slot or the second synchronization signal block in the slot.

In some embodiment, the resource position of the PDCCH monitoring occasion is selected from a beginning of a half slot, said determining a resource position of a PDSCH according to the resource position of the PDCCH monitoring occasion at least includes: performing a rate matching on a PDSCH scheduled by one of PDCCH monitoring occasions around the first synchronization signal block, and performing a rate matching on a PDSCH scheduled by another of the PDCCH monitoring occasions around the second synchronization signal block, if the number of PDCCH monitoring occasions is two ,and a starting symbol of one of the two PDCCH monitoring occasions associated with the first synchronization signal block in the slot is symbol 0 of the slot, or symbol 1 of the slot, a starting symbol of the other of the two PDCCH monitoring occasion associated with the second synchronization signal block in the slot is symbol 6 of the slot, or symbol 7 of the slot.

In some embodiment, the resource position of the PDCCH monitoring occasion is selected from a beginning of a half slot, a duration of a CORESET corresponding to the PDCCH is one symbol, said determining a resource position of a PDSCH according to the resource position of the PDCCH monitoring occasion at least includes: determining a starting symbol of a resource occupied by the PDSCH is 1, and a symbol length of the resource occupied by the PDSCH is 2, 3, 4, 5, or 6, if a mapping type of the PDSCH is TypeA; determining a starting symbol of a resource occupied by the PDSCH is 7, and a symbol length of the resource occupied by the PDSCH is 2, 3, 4, 5, 6, or 7, if a mapping type of the PDSCH is TypeB; or determining a starting symbol of a resource occupied by the PDSCH is 8, and a symbol length of the resource occupied by the PDSCH is 2, 3, 4, 5, or 6, if a mapping type of the PDSCH is TypeB.

In some embodiment, the resource position of the PDCCH monitoring occasion is selected from a beginning of a half slot, a duration or a symbol length of a CORESET corresponding to the PDCCH is one symbol, said determining a resource position of a PDSCH according to the resource position of the PDCCH monitoring occasion at least includes: determining a starting symbol of a resource occupied by the PDSCH is 1, and a symbol length of the resource occupied by the PDSCH is 2, 3, 4, 5, or 6, if a mapping type of the PDSCH is TypeA; determining a starting symbol of a resource occupied by the PDSCH is 7 and a symbol length of the resource occupied by the PDSCH is 2, 3, 4, 5, 6, or 7, if a mapping type of the PDSCH is TypeB and a starting symbol of the PDCCH monitoring occasion is 6; or determining a starting symbol of a resource occupied by the PDSCH is 8, and a symbol length of the resource occupied by the PDSCH is 2, 3, 4, 5, or 6, if a mapping type of the PDSCH is TypeB and a starting symbol of the PDCCH monitoring occasion is 7.

In some embodiment, the resource position of the PDCCH monitoring occasion is selected from a beginning of a half slot, said determining a resource position of a PDSCH according to the resource position of the PDCCH monitoring occasion at least includes: determining a starting symbol of a resource occupied by the PDSCH is 1, and a symbol length of the resource occupied by the PDSCH is 2, 3, 4, 5, or 6, if a mapping type of the PDSCH is TypeA and a duration of CORESET corresponding to the PDCCH is one symbol; or determining a starting symbol of a resource occupied by the PDSCH is 7, and a symbol length of the resource occupied by the PDSCH is 2, 3, 4, 5, 6, or 7, if a mapping type of the PDSCH is TypeB and a duration of a CORESET corresponding to the PDCCH is one symbol; or determining a starting symbol of a resource occupied by the PDSCH is 1, and a symbol length of the resource occupied by the PDSCH is 2, 3, 4, or 5, if a mapping type of the PDSCH is TypeA and a duration of a CORESET corresponding to the PDCCH is two symbols; or determining a starting symbol of a resource occupied by the PDSCH is 8, and a symbol length of the resource occupied by the PDSCH is 2, 3, 4, 5, or 6, if a mapping type of the PDSCH is TypeB and a duration of a CORESET corresponding to the PDCCH is two symbols; or determining a starting symbol of a resource occupied by the PDSCH is 8, and a symbol length of the resource occupied by the PDSCH is 2, 3, 4, 5, or 6, if a mapping type of the PDSCH is TypeB and a duration of a CORESET corresponding to the PDCCH is one symbol; or determining a starting symbol of a resource occupied by the PDSCH is 9, and a symbol length of the resource occupied by the PDSCH is 2, 3, 4, or 5, if a mapping type of the PDSCH is TypeB and a duration of a CORESET corresponding to the PDCCH is one symbol.

In some embodiment, the resource position of the PDCCH monitoring occasion is selected from a beginning of a half slot, said determining a resource position of a PDSCH according to the resource position of the PDCCH monitoring occasion at least includes: determining a starting symbol of a resource occupied by the PDSCH is 1, and a symbol length of the resource occupied by the PDSCH is 2, 3, 4, 5, or 6, if a mapping type of the PDSCH is TypeA; or determining a starting symbol of a resource occupied by the PDSCH is 7, and a symbol length of the resource occupied by the PDSCH is 2, 3, 4, 5, 6, or 7, if a mapping type of the PDSCH is TypeB, a starting symbol of the PDCCH monitoring occasion is 6, and a duration of a CORESET corresponding to the PDCCH is one symbol; or determining a starting symbol of a resource occupied by the PDSCH is 8, and a symbol length of the resource occupied by the PDSCH is 2, 3, 4, 5, or 6, if a mapping type of the PDSCH is TypeB, a starting symbol of the PDCCH monitoring occasion is 6, and a duration of a CORESET corresponding to the PDCCH is two symbols; or determining a starting symbol of a resource occupied by the PDSCH is 8, and a symbol length of the resource occupied by the PDSCH is 2, 3, 4, 5, or 6, if a mapping type of the PDSCH is TypeB, a starting symbol of the PDCCH monitoring occasion is 7, and a duration of a CORESET corresponding to the PDCCH is one symbol; or determining a starting symbol of a resource occupied by the PDSCH is 9, and a symbol length of the resource occupied by the PDSCH is 2, 3, 4, or 5, if a mapping type of the PDSCH is TypeB, a starting symbol of the PDCCH monitoring occasion is 7, and a duration of a CORESET corresponding to the PDCCH is two symbols.

In some embodiment, said determining a resource position of a PDCCH monitoring occasion in a slot includes: determining a resource position of the PDCCH monitoring occasion in the slot, according to a physical broadcast channel from a base station.

In some embodiment, the PDCCH is a TypeO-PDCCH, a TypeOA-PDCCH, a Type 1-PDCCH or a Type2-PDCCH.

In some embodiment, indicating to a user equipment, by a physical broadcast channel, the resource position of the PDCCH monitoring occasion in the slot.

In an embodiment of the present disclosure, a device for resource allocation is provided, including: a PDCCH monitoring occasion determination circuitry, configured to determine a resource position of a PDCCH monitoring occasion in a slot, the resource position of the PDCCH monitoring occasion is selected from a beginning of the slot or a beginning of a half slot; and a PDSCH resource determination circuitry, configured to determine a resource position of a scheduled PDSCH according to the resource position of the PDCCH monitoring occasion at least.

In an embodiment of the present disclosure, a storage medium having computer instructions stored therein is provided, when the computer instructions are executed, the method based on above is performed.

In an embodiment of the present disclosure, a user equipment comprising a memory and a processor is provided, wherein the memory has computer instructions stored therein, and the method based on above is performed, once the processor executes the computer instructions.

### Embodiments of the present disclosure have following benefits:

In embodiments of the present disclosure, a resource position of a PDCCH monitoring occasion in a slot is determined. The resource position of the PDCCH monitoring occasion is selected from a beginning of the slot or a beginning of a half slot. A resource position of a scheduled PDSCH is determined according to at least the resource position of the PDCCH monitoring occasion. In embodiments of the present disclosure, the resource position of the PDSCH scheduled by the PDCCH is determined by the PDCCH monitoring occasion, thereby ensuring that an appropriate resource position of the PDSCH is determined and improving the resource utilization.

Further, an associated synchronization signal block is determined according to the resource position of the PDCCH monitoring occasion; a time-frequency resource in a physical resource block or a resource block overlapping with the synchronization signal block on a symbol transmitting the synchronization signal block is determined and the determined time-frequency resource on the symbol overlapping with the synchronization signal block is excluded from the PDSCH resource. Alternatively, a time-frequency resource in a physical resource block or a resource block overlapping with the synchronization signal block on a symbol to which the PDSCH is allocated is determined and excluded from the PDSCH resource. Alternatively, a physical resource block overlapping with the synchronization signal block is determined and excluded from the PDSCH resource. Compared with the frequency division multiplexing of a synchronization signal block and a PDSCH resource in the conventional technology, a rate matching is performed on a PDSCH around a synchronization signal block in embodiments of the disclosure. That is, a physical resource block overlapping with a synchronization signal block is excluded to determine a PDSCH resource, so as to improve a resource utilization.

### BRIEF DESCRIPTION OF THE DRAWINGS

FIG. 1 is a flow chart of a method for resource allocation according to an embodiment of the present disclosure;
FIG. 2 is a flow chart of one embodiment of S102 shown in FIG. 1;
FIG. 3 is a schematic diagram of a specific application scenario according to an embodiment of the present disclosure;
FIG. 4 is a flow chart of another embodiment of S102 shown in FIG. 1;
FIG. 5 is a flow chart of yet another embodiment of S102 shown in FIG. 1;
FIG. 6 is a flow chart of yet another embodiment of S102 shown in FIG. 1;
FIG. 7 is a flow chart of yet another embodiment of S102 shown in FIG. 1;
FIG. 8 is a schematic structural diagram of a device for resource allocation according to an embodiment of the present disclosure.

### DETAILED DESCRIPTION

As described in background, in a initial access stage of a NR unlicensed spectrum, a problem focuses on a method for performing a rate matching on the RMSI PDSCH around a synchronization signal block by a UE. In addition, a precondition for performing the rate matching on the RMSI PDSCH is a time domain resource allocation for the RMSI PDSCH. Thus, the time domain resource allocation of the RMSI PDSCH should be designed.

In embodiments of the present disclosure, a resource position of a PDSCH scheduled by a PDCCH is determined by a PDCCH monitoring occasion, thereby ensuring that an appropriate resource position of the PDSCH is determined and improving a resource utilization.

Further, an associated synchronization signal block is determined according to the resource position of the PDCCH monitoring occasion; a time-frequency resource in a physical resource block or a resource block overlapping with the synchronization signal block on a symbol transmitting the synchronization signal block is determined; and the determined time-frequency resource on the symbol overlapping with the synchronization signal block is excluded from the PDSCH resource. Compared with the frequency division multiplexing of a synchronization signal block and a PDSCH resource in the conventional technology, a rate matching is performed on a PDSCH around a synchronization signal block in embodiments of the disclosure. That is, a physical resource block overlapping with a synchronization signal block is excluded to determine a PDSCH resource, so as to improve a resource utilization.

Embodiments of the present disclosure may be applicable to 5 Generation (5G) communication systems, 4G or 3G communication systems, and may also be applicable to new various communication systems in future, such as 6G, 7G, etc., which will not be limited in embodiments of the present disclosure.

In order to make the above objectives, features and beneficial effects of the present disclosure more apparent and understandable, specific embodiments of the present disclosure are described in detail below with reference to the accompanying drawings.

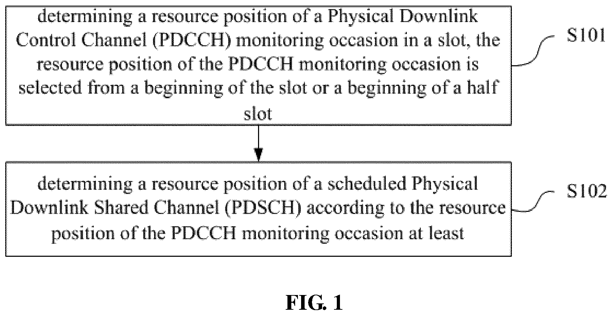

FIG. 1 is a flow chart of a method for resource allocation according to an embodiment of the present disclosure.

The method for resource allocation may be applicable to a user equipment side. That is, S101 and S102 of the method shown in FIG. 1 may be performed by a user equipment. Alternatively, the method for resource allocation may also be applicable to a base station side. That is, S101 and S102 of the method shown in FIG. 1 may be performed by a base station.

### The method for resource allocation may include following S101 and S102.

In S101, determining a resource position of a PDCCH monitoring occasion in a slot, the resource position of the PDCCH monitoring occasion is selected from a beginning of the slot or a beginning of a half slot.

In S102, determining a resource position of a scheduled PDSCH according to the resource position of the PDCCH monitoring occasion at least.

It should be noted that the sequence numbers of S101 and S102 in the embodiment of the present disclosure does not represent a limitation on a execution sequence of S101 and S102.

In embodiments of the present disclosure, RMSI in the Rel-15 NR corresponds to SIB1 in the Long Term Evolution (LTE) system, which includes main system information except a Master Information Block (MIB). RMSI may also be referred to as a System Information Block 1 (SIB1). RMSI is carried on a PDSCH. A PDSCH is scheduled by a PDCCH.

A PDSCH herein may refer to a PDSCH carrying RMSI, which may also be referred as RMSI PDSCH. Alternatively, the PDSCH may refer to a PDSCH carrying paging, or a PDSCH carrying OSI. A PDCCH in the present disclosure may be used to schedule a PDSCH described above.

In a specific implementation of S101, a resource position of a PDCCH monitoring occasion in a slot may be determined. A PDCCH monitoring occasion may refer to a resource for monitoring a PDCCH. Wherein a resource position of a PDCCH monitoring occasion is selected from a beginning of a slot or a beginning of a half slot.

In particular, a beginning of a slot may refer to first N symbols of the slot, and N is a positive integer greater than or equal to 1. A beginning of a half slot may refer to first N symbols of the half slot. A half slot may refer to a time-domain location that divides a slot into two parts. For example, a slot includes 14 symbols, and the slot may be divided into two half slots, one of the half slot is symbol 0 to symbol 6, and the other of the half slot is symbol 7 to symbol 13. For another example, a slot includes 14 symbols, and the slot may be divided into two half slots, one is symbol 0 to symbol 5, and the other is symbol 6 to symbol 13,

It should be noted that a definition or division method for a half slot can be any other implementation mode, which will not be limited in embodiments of the present disclosure.

In one embodiment of the present disclosure, a PDCCH may be a TypeO-PDCCH, a TypeOA-PDCCH, a Type 1-PDCCH, or a Type2-PDCCH.

In a specific implementation, a TypeO-PDCCH may refer to a PDCCH for scheduling a PDSCH carrying RMSI, a Type0A-PDCCH may refer to a PDCCH for scheduling a PDSCH carrying OSI, a Type 1-PDCCH may refer to a PDCCH for scheduling a PDSCH carrying a Random Access Response (RAR), and a Type2-PDCCH may refer to a PDCCH for scheduling a PDSCH carrying a paging.

A search space set in which a PDCCH is located may be a TypeO-PDCCH search space set. In general, a TypeO-PDCCH search space set, which is configured by a MIB or which is configured by RRC in a handover condition, is referred as Search Space 0 (or Search Space Set 0). A control resource set (CORESET), which is banded with the TypeO-PDCCH search space set, is referred as CORESET 0. In addition to a search space set of a RMSI PDCCH, other common search spaces or common search space sets, such as a search space set for a OSI PDCCH (TYPE0A-PDCCH search space set), a search space set for a RAR PDCCH (TYPE1-PDCCH search space set), a search space set for a paging PDCCH (TYPE2 -PDCCH search space set) and the like, may be the same as the search space set 0 by default.

In an embodiment of the present disclosure, the S101 of FIG. 1 may include: determining a resource position of a PDCCH monitoring occasion in a slot, according to a physical broadcast channel from a base station.

It should be understood that, in general, a UE may obtain a PDCCH monitoring occasion from a physical broadcast channel (PBCH), or from any other applicable signaling, which will not be limited in embodiments of the present disclosure.

In another embodiment of the present disclosure, the S101 shown in FIG. 1 may include: indicating to a user equipment, by a physical broadcast channel, a resource position of a PDCCH monitoring occasion in a slot.

In this embodiment, a base station may determine a resource position of a PDCCH monitoring occasion in a slot and sends the determined resource position to a UE through a PBCH. A base station may also send a PDCCH monitoring occasion using any other applicable signaling, which will not be limited in embodiments of the present disclosure.

In a specific embodiment of S102, a UE determines a resource position of a scheduled PDSCH based at least on a resource position of a PDCCH monitoring occasion.

In a specific embodiment, a search space set includes characters on a PDCCH monitoring occasion and a type of search space. A search space set may be bind with a CORESET. A CORESET includes a frequency domain resource and duration of a PDCCH, etc.

In a specific embodiment, a PDCCH monitoring occasion has an association relationship with a synchronization signal block. A UE may obtain the association relationship according to a preset PDCCH monitoring occasion table. In a initial access stage, a UE searches for a synchronization signal block, and determines a time domain position (including a starting symbol index or the first symbol index, etc.) of a PDCCH associated with the synchronization signal block, according to a row index of a table indicated by a PBCH, and detects the PDCCH. And the UE receives and decodes a PDSCH according to the PDCCH schedule.

In an embodiment of the present disclosure, a resource position of a PDSCH scheduled by a PDCCH is determined according to a PDCCH monitoring occasion, thereby ensuring that an appropriate resource position of the PDSCH is determined and improving a resource utilization.

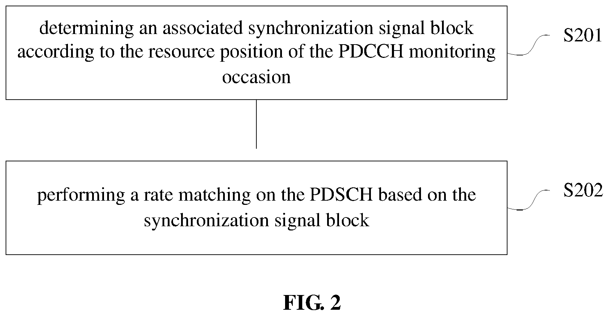

In a non-restrictive embodiment of the present disclosure, referring to FIG. 2, the S102 shown in FIG. 1 may include following S201 and S202.

In S201, determining an associated synchronization signal block according to the resource position of the PDCCH monitoring occasion.

In S202, performing a rate matching on the PDSCH around the synchronization signal block.

In a specific implementation, a synchronization signal block associated with a PDCCH monitoring occasion can be determined according to a preset PDCCH monitoring occasion table and the PDCCH monitoring occasion. A preset PDCCH monitoring occasion table may include a plurality of PDCCH monitoring occasions and information of synchronization signal blocks corresponding to the PDCCH monitoring occasions. The information of the synchronization signal blocks may specifically be the number of synchronization signal blocks and positions of synchronization signal blocks.

It should be noted that " a plurality of " appearing in the present disclosure refers to two or more. A preset PDCCH monitoring occasion table may be a pre-transmitted by a base station to a UE, or predetermined by a communication standard protocol, which will not be limited in embodiments of the present disclosure.

Those skilled in the art should understand that a specific implementation of a rate matching may refer to the conventional technology, which will not be limited in embodiments of the present disclosure.

In another non-restrictive embodiment of the present disclosure, the S202 of FIG. 2 may include: determining a time-frequency resource in a physical resource block or a resource block overlapping with the synchronization signal block on a symbol transmitting the synchronization signal block, and excluding the determined time-frequency resource on the symbol overlapping with the synchronization signal block from the PDSCH resource; or determining a time-frequency resource in a physical resource block or a resource block overlapping with the synchronization signal block on a symbol to which the PDSCH is allocated, or determining a time-frequency resource of a physical resource block or a resource block overlapping with the synchronization signal block, and excluding the determined time-frequency resource from the PDSCH resource on the symbol overlapping with the synchronization signal block.

Specifically, when a resource of a Demodulation Reference Signal (DMRS) of a PDSCH does not overlap with a resource of a synchronization signal block, a time-frequency resource in a physical resource block or a resource block overlapping with the synchronization signal block on a symbol transmitting the synchronization signal block may be determined and excluded from the PDSCH resource. In this way, the number of resources excluded by a PDSCH in a rate matching process may be reduced.

When a resource of a DMRS of a PDSCH overlaps with a resource of a synchronization signal block or a resource of a DMRS of a PDSCH is consistent with a resource of a synchronization signal block, a time-frequency resource in a physical resource block or a resource block overlapping with the synchronization signal block on a symbol to which the PDSCH is allocated may be determined and excluded from the PDSCH resource; or a time-frequency resource of a physical resource block or a resource block overlapping with the synchronization signal block may be determined and excluded from the PDSCH resource. In this way, a complexity of additional processing, such as a additional channel estimation interpolation, of PDSCH/DMRS resource collisions by a UE may be reduced.

Compared with a frequency division multiplexing of a resource of a synchronization signal block and a PDSCH resource in the conventional technology, in embodiments of the present disclosure, a rate matching is performed on a PDSCH around a synchronization signal block. That is, a physical resource block overlapping with a synchronization signal block is excluded to determine a PDSCH resource, so as to improve a resource utilization.

In a non-restrictive embodiment of the present disclosure, a resource position of a PDCCH monitoring occasion is selected from a beginning of a slot. The S102 shown in FIG. 1 may:

If the number of PDCCH monitoring occasions is two, and the two PDCCH monitoring occasions are respectively associated with two synchronization signal blocks in a slot, a rate matching is performed on a PDSCH around the two synchronization signal blocks.

In an alternative embodiment of the present disclosure, if the number of PDCCH monitoring occasions is two, and two synchronization signal blocks are in a slot; a starting symbol of the first PDCCH monitoring occasion is symbol 0 or symbol 1 of the slot; and an index of a starting symbol of the second PDCCH monitoring occasion is a duration or a symbol length of a CORESET corresponding to the PDCCH, or the duration or the symbol length of the CORESET corresponding to the PDCCH plus one. In this case, a rate matching is performed on a PDSCH around the two synchronization signal blocks.

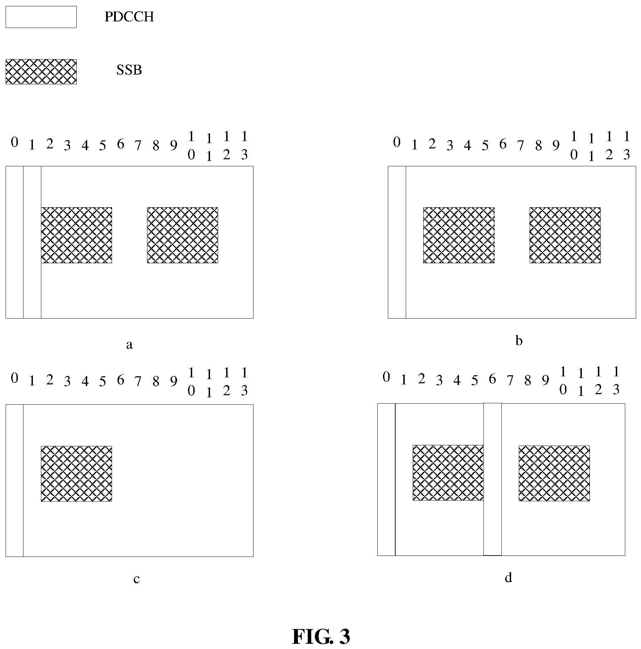

Referring to FIG. 3, as shown in a reference number a in FIG. 3, the number of PDCCH monitoring occasions is two, and the two PDCCH monitoring occasions respectively occupy symbol 0 and symbol 1. Two synchronization signal blocks are in a slot. One of the two synchronization signal blocks occupies symbol 2 to symbol 5, and the other synchronization signal block occupies symbol 8 to symbol 11.

In particular, a earlier one of the two PDCCH monitoring occasions may be referred as the first PDCCH monitoring occasion, and the other PDCCH monitoring occasion may be referred as the second PDCCH monitoring occasion.

In particular, a synchronization signal block occupying symbol 2 to symbol 5 may be referred as an even synchronization signal block, or the first synchronization signal block, or the first synchronization signal block in a slot; a synchronization signal block occupying symbol 8 to symbol 11 may be referred as an odd synchronization signal block, or the second synchronization signal block, or the second synchronization signal block in a slot. The first PDCCH monitoring occasion may be associated with the first synchronization signal block, and the second PDCCH monitoring occasion may be associated with the second synchronization signal block, which will not be limited in embodiments of the present disclosure.

Further, a starting symbol of a PDCCH monitoring occasion associated with the first synchronization signal block in a slot is symbol 0 of the slot or symbol 1 of the slot. An index of a starting symbol of the PDCCH monitoring occasion associated with the second synchronization signal block in the slot is a duration or a symbol length of a CORESET corresponding to the PDCCH, or the duration or the symbol length of the CORESET corresponding to the PDCCH plus one.

For example, if a starting symbol of the first PDCCH monitoring occasion is symbol 0, and a duration of a CORESET corresponding to the PDCCH is one symbol, a starting symbol of the second PDCCH monitoring occasion may be symbol 1 or symbol 2.

In a non-restrictive embodiment of the present disclosure, a resource position of a PDCCH monitoring occasion is selected from a beginning of a slot. The S102 shown in FIG. 1 may include:

Performing a rate matching on the PDSCH around two synchronization signal blocks, if the number of the PDCCH monitoring occasion is one, and the PDCCH monitoring occasion is associated with the two synchronization signal blocks in the slot.

In an alternative embodiment of the present disclosure, performing a rate matching on the PDSCH around two synchronization signal blocks, if the number of the PDCCH monitoring occasion is one, the slot includes the two synchronization signal blocks, and a starting symbol of the PDCCH monitoring occasion is symbol 0 of the slot, symbol 1 of the slot, a duration or a symbol length of a CORESET, or the duration or the symbol length of the CORESET plus one.

Referring to FIG. 3, as shown in a reference number b in FIG. 3, the number of PDCCH monitoring occasion is one, and the PDCCH monitoring occasion occupies symbol 0. Two synchronization signal blocks are in a slot. One of the two synchronization signal blocks occupies symbol 2 to symbol 5, and the other occupies symbol 8 to symbol 11. The PDCCH monitoring occasion is associated with the two synchronization signal blocks.

Further, a starting symbol of a PDCCH monitoring occasion is symbol 0 of a slot, symbol 1 of a slot, a duration or a symbol length of a CORESET, or the duration or the symbol length of the CORESET plus one.

Further, two synchronization signal blocks have Quasi Co-Location (QCL) relationship.

In a non-restrictive embodiment of the present disclosure, a resource position of a PDCCH monitoring occasion is selected from a beginning of a slot. The S102 shown in FIG. 1 may include:

Performing a rate matching on the PDSCH around a single synchronization signal block, if the number of the PDCCH monitoring occasion is one, and the PDCCH monitoring occasion is associated with the single synchronization signal block within the slot.

In an alternative embodiment of the present disclosure, performing a rate matching on the PDSCH around a single synchronization signal block, if the number of the PDCCH monitoring occasion is one, the slot includes the single synchronization signal block, and a starting symbol of the PDCCH monitoring occasion is symbol 0 of the slot, symbol 1 of the slot, a duration or a symbol length of a CORESET, the duration or the symbol length of the CORESET plus one.

Referring to FIG. 3, as shown in reference number c in FIG. 3, the number of PDCCH monitoring occasion is one, and the PDCCH monitoring occasion occupies symbol 0. One synchronization signal block is in a slot, and the synchronization signal block occupies symbol 2 to symbol 5. The PDCCH monitoring occasion is associated with the synchronization signal block.

Alternatively, a synchronization signal block may also occupy symbol 8 to symbol 11.

Further, a starting symbol of a PDCCH monitoring occasion is symbol 0 of a slot, symbol 1 of a slot, a duration or a symbol length of a CORESET, the duration or the symbol length of the CORESET plus one.

Further, if a single synchronization signal block is the first synchronization signal block, a starting symbol of a monitoring occasion is symbol 0 or symbol 1 of a slot. If the single synchronization signal block is the second synchronization signal block, a starting symbol of the monitoring occasion is a duration or a symbol length of the CORESET, or the duration or the symbol length of the CORESET plus one.

In a non-restrictive embodiment of the present disclosure, a resource position of a PDCCH monitoring occasion is selected from a beginning of a half slot. The S102 shown in FIG. 1 may include:
In an alternative embodiment of the present disclosure, performing a rate matching on a PDSCH scheduled by one of PDCCH monitoring occasions around the first synchronization signal block, and performing a rate matching on a PDSCH scheduled by another of the PDCCH monitoring occasions around the second synchronization signal block, if the number of PDCCH monitoring occasions is two, one of the PDCCH monitoring occasions is associated with the first synchronization signal block in the slot, the other is associated with the second synchronization signal block in the slot.

Further, a starting symbol of one of the two PDCCH monitoring occasions is symbol 0 or symbol 1, and a starting symbol of the other of the two PDCCH monitoring occasions is symbol 6 or symbol 7.

In an alternative embodiment of the present disclosure, performing a rate matching on a PDSCH scheduled by one of PDCCH monitoring occasions around the first synchronization signal block, and performing a rate matching on a PDSCH scheduled by another of the PDCCH monitoring occasions around the second synchronization signal block, if the number of PDCCH monitoring occasions is two, the slot comprises the two synchronization signal blocks, a starting symbol of one of the two PDCCH monitoring occasions is symbol 0 or symbol 1, and a starting symbol of the other of the two PDCCH monitoring occasion is symbol 6 or symbol 7.

Further, one of the two PDCCH monitoring occasions is associated with the first synchronization signal block in a slot, and the other of the two PDCCH monitoring occasions is associated with the second synchronization signal block in a slot.

Half slots in this embodiment may refer to symbol 0 to symbol 5, and symbol 6 to symbol 13. Alternatively, half slots may refer to symbol 0 to symbol 6, and symbol 7 to symbol 13.

Referring to FIG. 3, as shown in reference number d in FIG. 3, the number of PDCCH monitoring occasions in a slot is two, a starting symbol of the first PDCCH monitoring occasion is symbol 0, and a starting symbol of the second PDCCH monitoring occasion is symbol 6. Two synchronization signal blocks are in the slot, the first synchronization signal block occupies symbol 2 to symbol 5, and the second synchronization signal block occupies symbol 8 to symbol 11. The PDCCH monitoring occasions are associated with the synchronization signal blocks.

In this case, a rate matching may be performed on a PDSCH scheduled for the first PDCCH monitoring occasion around the first synchronization signal block. A rate matching may be performed on a PDSCH scheduled for the second PDCCH monitoring occasion around the second synchronization signal block.

Alternatively, a starting symbol of the second PDCCH monitoring occasion is symbol 7. The second synchronization signal block occupies symbol 9 to symbol 12.

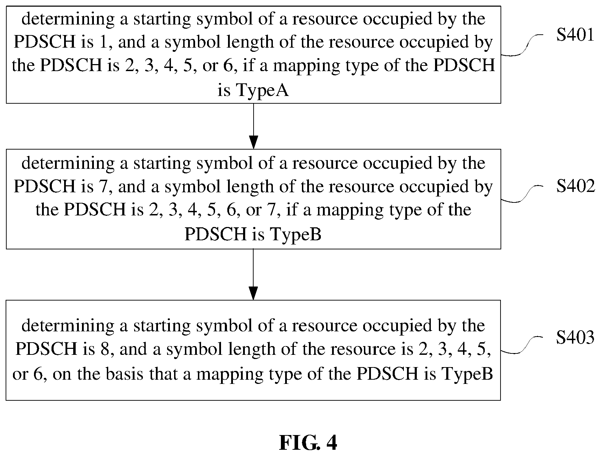

In a non-restrictive embodiment of the present disclosure, a resource position of a PDCCH monitoring occasion is selected from a beginning of a half slot, and a duration of a CORESET corresponding to the PDCCH is one symbol. Referring to FIG. 4, the S102 shown in FIG. 1 may include:
In S401, determining a starting symbol of a resource occupied by the PDSCH is 1, and a symbol length of the resource occupied by the PDSCH is 2, 3, 4, 5, or 6, if a mapping type of the PDSCH is TypeA.

In general, a mapping type of a PDSCH is TypeA, that is, a mapping type of a PDSCH DMRS is TypeA. In general, when a mapping type of a PDSCH is TypeA, a PDSCH DMRS begins with a symbol with an index of 2 in a slot, or a symbol with an index of 3 in the slot, where the index starts from 0.

In S402, determining a starting symbol of a resource occupied by the PDSCH is 7, and a symbol length of the resource occupied by the PDSCH is 2, 3, 4, 5, 6, or 7, if a mapping type of the PDSCH is TypeB.

In general, a mapping type of a PDSCH is TypeB, that is, a mapping type of a PDSCH DMRS mapping type is TypeB. In general, when a mapping type of a PDSCH is TypeB, a PDSCH DMRS begins with the first symbol of a scheduled PDSCH.

In S403, determining a starting symbol of a resource occupied by the PDSCH is 8, and a symbol length of the resource occupied by the PDSCH is 2, 3, 4, 5, or 6, if a mapping type of the PDSCH is TypeB.

It should be noted that, in a specific implementation, a UE or a base station may selectively perform one of the S401, S402, and S403 according to different actual application scenarios.

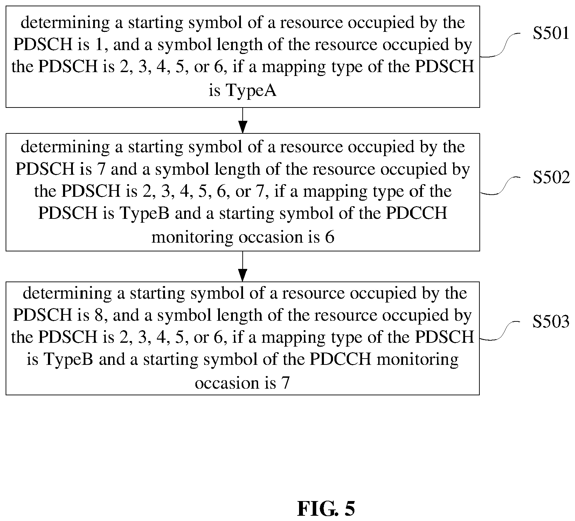

In this embodiment, with respect to a time-domain resource allocation of a PDSCH, a UE may determine a time-domain resource of a PDSCH by a TDRA table in Rel-15 NR, when the UE is indicated that a starting symbol of a PDCCH monitoring occasion is selected from a beginning of a slot, i.e., a TypeO-PDCCH monitoring occasion is a TypeO-PDCCH monitoring occasion based on the slot. The UE needs to determine a time-domain resource of a PDSCH by some new ways, such as by one of S401, S402, S403(or one of the ways shown in FIG. 5, FIG. 6 or FIG. 7) determining a time-domain resource of a PDSCH, when the UE is indicated that a starting symbol of a PDCCH monitoring occasion is selected from a beginning of a half slot.

16 code points are occupied at most in the embodiment of the present disclosure.

In an implementation, a time-domain resource of a PDSCH determined by S401 is symbol 1 to symbol 2, or symbol 1 to symbol 3, or symbol 1 to symbol 4, or symbol 1 to symbol 5, or symbol 1 to symbol 6.

A time-domain resource of a PDSCH determined by S402 is symbol 7 to symbol 8, or symbol 7 to symbol 9, or symbol 7 to symbol 10, or symbol 7 to symbol 11, or symbol 7 to symbol 12, or symbol 7 to symbol 13.

A time-domain resource of a PDSCH determined by S403 is symbol 8 to symbol 9, or symbol 8 to symbol 10, or symbol 8 to symbol 11, or symbol 8 to symbol 12, or symbol 8 to symbol 13.

In a non-restrictive embodiment of the present disclosure, a starting symbol of a PDCCH monitoring occasion is selected from a beginning of a half slot, a duration or symbol length of a CORESET corresponding to the PDCCH is one symbol. Referring to FIG. 5, the S102 shown in FIG. 1 may include:
In S501, determining a starting symbol of a resource occupied by the PDSCH is 1, and a symbol length of the resource occupied by the PDSCH is 2, 3, 4, 5, or 6, if a mapping type of the PDSCH is TypeA.
In S502, determining a starting symbol of a resource occupied by the PDSCH is 7 and a symbol length of the resource occupied by the PDSCH is 2, 3, 4, 5, 6, or 7, if a mapping type of the PDSCH is TypeB and a starting symbol of the PDCCH monitoring occasion is 6.
In S503, determining a starting symbol of a resource occupied by the PDSCH is 8, and a symbol length of the resource occupied by the PDSCH is 2, 3, 4, 5, or 6, if a mapping type of the PDSCH is TypeB and a starting symbol of the PDCCH monitoring occasion is 7.

It should be noted that in a specific implementation, a UE or a base station may selectively perform one of the S501, S502, and S503 according to different actual application scenarios.

11 code points are occupied at most, in the embodiment of the present disclosure.

In an implementation, a time-domain resource of a PDSCH determined by S501 is symbol 1 to symbol 2, or symbol 1 to symbol 3, or symbol 1 to symbol 4, or symbol 1 to symbol 5, or symbol 1 to symbol 6.

A time-domain resource of a PDSCH determined by S502 is symbol 7 to symbol 8, or symbol 7 to symbol 9, or symbol 7 to symbol 10, or symbol 7 to symbol 11, or symbol 7 to symbol 12, or symbol 7 to symbol 13.

A time-domain resource of a PDSCH determined by S503 is symbol 8 to symbol 9, or symbol 8 to symbol 10, or symbol 8 to symbol 11, or symbol 8 to symbol 12, or symbol 8 to symbol 13.

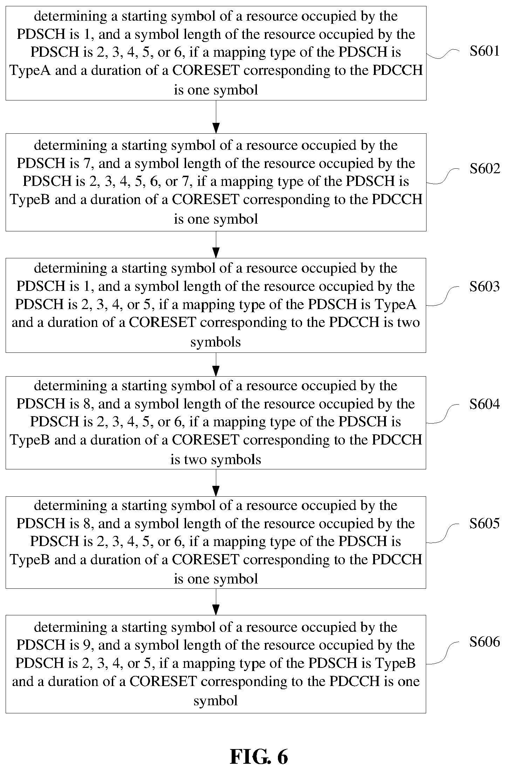

In a non-restrictive embodiment of the present disclosure, a starting symbol of a PDCCH monitoring occasion is selected from a beginning of a half slot. Referring to FIG. 6, the S102 shown in FIG. 1 may include:
In S601, determining a starting symbol of a resource occupied by the PDSCH is 1, and a symbol length of the resource occupied by the PDSCH is 2, 3, 4, 5, or 6, if a mapping type of the PDSCH is TypeA and a duration of a CORESET corresponding to the PDCCH is one symbol.
In S602, determining a starting symbol of a resource occupied by the PDSCH is 7, and a symbol length of the resource occupied by the PDSCH is 2, 3, 4, 5, 6, or 7, if a mapping type of the PDSCH is TypeB and a duration of a CORESET corresponding to the PDCCH is one symbol.
In S603, determining a starting symbol of a resource occupied by the PDSCH is 1, and a symbol length of the resource occupied by the PDSCH is 2, 3, 4, or 5, if a mapping type of the PDSCH is TypeA and a duration of a CORESET corresponding to the PDCCH is two symbols.
In S604, determining a starting symbol of a resource occupied by the PDSCH is 8, and a symbol length of the resource occupied by the PDSCH is 2, 3, 4, 5, or 6, if a mapping type of the PDSCH is TypeB and a duration of a CORESET corresponding to the PDCCH is two symbols.
In S605, determining a starting symbol of a resource occupied by the PDSCH is 8, and a symbol length of the resource occupied by the PDSCH is 2, 3, 4, 5, or 6, if a mapping type of the PDSCH is TypeB and a duration of a CORESET corresponding to the PDCCH is one symbol.
In S606, determining a starting symbol of a resource occupied by the PDSCH is 9, and a symbol length of the resource occupied by the PDSCH is 2, 3, 4, or 5, if a mapping type of the PDSCH is TypeB and a duration of a CORESET corresponding to the PDCCH is one symbol.

It should be noted that in a specific implementation, a UE or a base station may selectively perform one of the S601 to S606 according to different actual application scenarios.

16 code points are occupied at most in the embodiment of the present disclosure.

In an implementation, a time-domain resource of a PDSCH determined by S601 is symbol 1 to symbol 2, or symbol 1 to symbol 3, or symbol 1 to symbol 4, or symbol 1 to symbol 5, or symbol 1 to symbol 6. A time-domain resource of a PDSCH determined by the S603 is symbol 1 to symbol 2, or symbol 1 to symbol 3, or symbol 1 to symbol 4, or symbol 1 to symbol 5.

A time-domain resource of a PDSCH determined by S602 is symbol 7 to symbol 8, or symbol 7 to symbol 9, or symbol 7 to symbol 10, or symbol 7 to symbol 11, or symbol 7 to symbol 12, or symbol 7 to symbol 13.

A time-domain resource of a PDSCH determined by S604 and S605 is symbol 8 to symbol 9, or symbol 8 to symbol 10, or symbol 8 to symbol 11, or symbol 8 to symbol 12, or symbol 8 to symbol 13.

A time-domain resource of a PDSCH determined by S606 is symbol 9 to symbol 10, or symbol 9 to symbol 11, or symbol 9 to symbol 12, or symbol 9 to symbol 13.

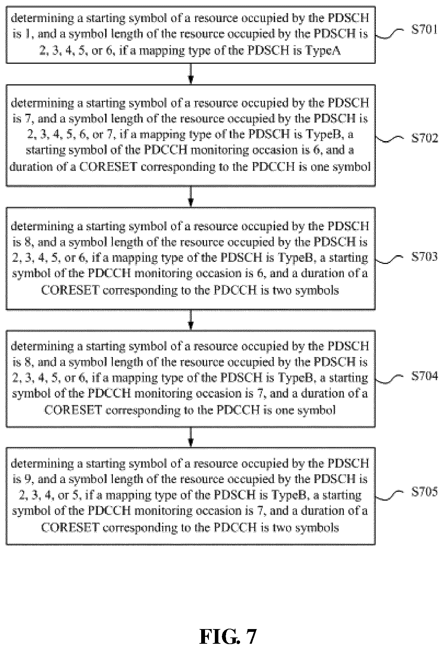

In a non-restrictive embodiment of the present disclosure, a starting symbol of a PDCCH monitoring occasion is selected from a beginning of a half slot. Referring to FIG. 7, the S102 shown in FIG. 1 may include:
In S701, determining a starting symbol of a resource occupied by the PDSCH is 1, and a symbol length of the resource occupied by the PDSCH is 2, 3, 4, 5, or 6, if a mapping type of the PDSCH is TypeA.
In S702, determining a starting symbol of a resource occupied by the PDSCH is 7, and a symbol length of the resource occupied by the PDSCH is 2, 3, 4, 5, 6, or 7, if a mapping type of the PDSCH is TypeB, a starting symbol of the PDCCH monitoring occasion is 6, and a duration of a CORESET corresponding to the PDCCH is one symbol.
In S703, determining a starting symbol of a resource occupied by the PDSCH is 8, and a symbol length of the resource occupied by the PDSCH is 2, 3, 4, 5, or 6, if a mapping type of the PDSCH is TypeB, a starting symbol of the PDCCH monitoring occasion is 6, and a duration of a CORESET corresponding to the PDCCH is two symbols.
In S704, determining a starting symbol of a resource occupied by the PDSCH is 8, and a symbol length of the resource occupied by the PDSCH is 2, 3, 4, 5, or 6, if a mapping type of the PDSCH is TypeB, a starting symbol of the PDCCH monitoring occasion is 7, and a duration of a CORESET corresponding to the PDCCH is one symbol.
In S705, determining a starting symbol of a resource occupied by the PDSCH is 9, and a symbol length of the resource occupied by the PDSCH is 2, 3, 4, or 5, if a mapping type of the PDSCH is TypeB, a starting symbol of the PDCCH monitoring occasion is 7, and a duration of a CORESET corresponding to the PDCCH is two symbols.

It should be noted that in a specific implementation, a UE or a base station may selectively perform one of the S701 to S705 according to different actual application scenarios.

11 code points are occupied at most in the embodiment of the present disclosure.

In an implementation, a time-domain resource of a PDSCH determined by S701 is symbol 1 to symbol 2, or symbol 1 to symbol 3, or symbol 1 to symbol 4, or symbol 1 to symbol 5, or symbol 1 to symbol 6.

A time-domain resource of a PDSCH determined by S702 is symbol 7 to symbol 8, or symbol 7 to symbol 9, or symbol 7 to symbol 10, or symbol 7 to symbol 11, or symbol 7 to symbol 12, or symbol 7 to symbol 13.

A time-domain resource of a PDSCH determined by S703 and the S704 is symbol 8 to symbol 9, or symbol 8 to symbol 10, or symbol 8 to symbol 11, or symbol 8 to symbol 12, or symbol 8 to symbol 13.

A time-domain resource of a PDSCH determined by S705 is symbol 9 to symbol 10, or symbol 9 to symbol 11, or symbol 9 to symbol 12, or symbol 9 to symbol 13.

In methods shown in FIG. 4 to FIG. 7 above, a time-domain resource of a PDSCH is determined by such as a mapping type of the PDSCH, a starting symbol of a PDCCH monitoring occasion, a mapping relation between a duration of a CORSET corresponding to a PDCCH and a starting symbol of the PDSCH resource and a mapping relation between the duration of the CORSET corresponding to the PDCCH and a symbol length of the PDSCH resource. The mapping relationship can be used as a new TDRA table.

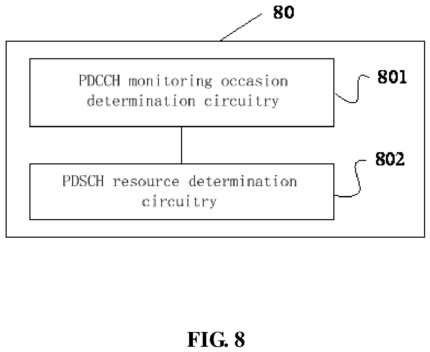

Referring to FIG. 8, a device for resource allocation is further provided according to an embodiment of the present disclosure. The device for resource allocation 80 may include a PDCCH monitoring occasion determination circuitry 801 and a PDSCH resource determination circuitry 802.

The PDCCH monitoring occasion determination circuitry 801 is configured to determine a resource position of a PDCCH monitoring occasion in a slot, the resource position of the PDCCH monitoring occasion is selected from a beginning of the slot or a beginning of a half slot. The PDSCH resource determining circuitry 802 is configured to determine a resource position of a scheduled PDSCH according to the resource position of the PDCCH monitoring occasion at least.

More content regarding the operating principle and operating mode of the device for resource allocation 80 may be described with reference to the related descriptions of FIG. 1 to FIG. 7, which will not be repeated herein.

In an embodiment of the present disclosure, a storage medium having computer instructions stored therein is provided, wherein once the computer instructions are executed, the above methods shown in FIG. 1 to FIG. 7 is performed. In some embodiment, the storage medium may include a non-volatile or non-transitory memory or the like. The storage medium includes a Read Only Memory (ROM), a Random Access Memory (RAM), a magnetic disk, an optical disk or the like.

In an embodiment of the present disclosure, a terminal including a memory and a processor is provided, wherein the memory has computer instructions stored therein, and when the processor executes the computer instructions, the above methods shown in FIG. 1 to FIG.7 is performed. The user equipment includes, but is not limited to, a terminal device, such as, a mobile phone, a computer, a tablet computer.

A user equipment in embodiments of the present disclosure may refer to various forms of User Equipment (UE), access terminals, user units, user stations, Mobile Stations (MS) , remote stations, remote terminals, mobile devices, user terminals, terminal equipments, wireless communication devices, user agents or user devices. The terminal device may also be a cellular phone, a cordless phone, a Session Initiation Protocol (SIP) phone, a Wireless Local Loop (WLL) station, a Personal Digital Assistant (PDA), a handheld device with the wireless communication function, a computing device or other processing devices connected to a wireless modem, vehicle equipments, wearable devices, terminal devices in the future 5G network, terminal devices in the future Public Land Mobile Network (PLMN), and the like, which is not limited in embodiments of the present disclosure..

It should be understood that, in the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a ROM, a Programmable ROM (PROM), an Erasable PROM (EPROM), an electrically Erasable EPROM (EEPROM), or a flash memory. The volatile memory may be a RAM which functions as an external cache. By way of example but not limitation, various forms of random access memory are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchlink DRAM (SLDRAM), and Direct Rambus RAM (DR RAM).

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire (e.g., infrared, wireless, microwave and etc.). The computer readable storage medium may be any available medium that can be accessed by a computer or a data storage device such as a server or a data center that contains one or more sets of available media. The available medium may be a magnetic medium (e.g., floppy disk, hard disk or magnetic tape), an optical medium (e.g., DVD), or a semiconductor medium. The semiconductor medium may be a solid disk.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for resource allocation, **characterized by** comprising:
determining a resource position of a Physical Downlink Control Channel (PDCCH) monitoring occasion in a slot, the resource position of the PDCCH monitoring occasion is selected from a beginning of the slot or a beginning of a half slot; and
determining a resource position of a scheduled Physical Downlink Shared Channel (PDSCH) according to the resource position of the PDCCH monitoring occasion at least.

2. The method according to claim 1, **characterized in that** said determining a resource position of a PDSCH according to the resource position of the PDCCH monitoring occasion comprises:
determining an associated synchronization signal block according to the resource position of the PDCCH monitoring occasion; and
performing a rate matching on the PDSCH around the synchronization signal block.

3. The method according to claim 1, **characterized in that** said determining a resource position of a PDSCH according to the resource position of the PDCCH monitoring occasion comprises:
determining an associated synchronization signal block according to the resource position of the PDCCH monitoring occasion; and
determining a time-frequency resource in a physical resource block or a resource block overlapping with the synchronization signal block on a symbol transmitting the synchronization signal block, and excluding the determined time-frequency resource on the symbol overlapping with the synchronization signal block from the PDSCH resource; or determining a time-frequency resource in a physical resource block or a resource block overlapping with the synchronization signal block on a symbol to which the PDSCH is allocated, or determining a time-frequency resource of a physical resource block or a resource block overlapping with the synchronization signal block, and excluding the determined time-frequency resource from the PDSCH resource on the symbol overlapping with the synchronization signal block.

4. The method according to claim 1, **characterized in that** the resource position of the PDCCH monitoring occasion is selected from a beginning of the slot, wherein said determining a resource position of a PDSCH according to the resource position of the PDCCH monitoring occasion at least comprises:
performing a rate matching on the PDSCH around two synchronization signal blocks, if the number of the PDCCH monitoring occasions is two and the two PDCCH monitoring occasions are respectively associated with the two synchronization signal blocks in the slot; or
performing a rate matching on the PDSCH around two synchronization signal blocks, if the number of the PDCCH monitoring occasions is two, the slot comprises the two synchronization signal blocks, and a starting symbol of the first PDCCH monitoring occasion is symbol 0 of the slot or symbol 1 of the slot, and an index of a starting symbol of the second PDCCH monitoring occasion is a duration or a symbol length of a control-resource set (CORESET) corresponding to the PDCCH, or the duration or the symbol length of the CORESET corresponding to the PDCCH plus one.

5. The method according to claim 4, **characterized in that** a starting symbol of the PDCCH monitoring occasion associated with the first synchronization signal block in the slot is symbol 0 or symbol 1 of the slot, an index of a starting symbol of the PDCCH monitoring occasion associated with the second synchronization signal block in the slot is a duration or a symbol length of a CORESET corresponding to the PDCCH, or the duration or the symbol length of the CORESET corresponding to the PDCCH plus one.

6. The method according to claim 1, **characterized in that** the resource position of the PDCCH monitoring occasion is selected from a beginning of the slot, wherein said determining a resource position of a PDSCH according to the resource position of the PDCCH monitoring occasion at least comprises:
performing a rate matching on the PDSCH around two synchronization signal blocks, if the number of the PDCCH monitoring occasion is one, and the PDCCH monitoring occasion is associated with the two synchronization signal blocks in the slot; or
performing a rate matching on the PDSCH around two synchronization signal blocks, if the number of the PDCCH monitoring occasion is one, the slot includes the two synchronization signal blocks, and a starting symbol of the PDCCH monitoring occasion is symbol 0 of the slot, symbol 1 of the slot, a duration or a symbol length of a CORESET, or the duration or the symbol length of the CORESET plus one.

7. The method according to claim 6, **characterized in that** a starting symbol of the PDCCH monitoring occasion is symbol 0 of the slot, symbol 1 of the slot, a duration or a symbol length of a CORESET, the duration or the symbol length of the CORESET plus one.

8. The method according to claim 6, **characterized in that** the two synchronization signal blocks have a quasi co-location relationship.

9. The method according to claim 1, **characterized in that** the resource position of the PDCCH monitoring occasion is selected from a beginning of the slot, wherein said determining a resource position of a PDSCH according to the resource position of the PDCCH monitoring occasion at least comprises:
performing a rate matching on the PDSCH around a single synchronization signal block, if the number of the PDCCH monitoring occasion is one, and the PDCCH monitoring occasion is associated with the single synchronization signal block within the slot; or
performing a rate matching on the PDSCH around a single synchronization signal block, if the number of the PDCCH monitoring occasion is one, the slot includes the single synchronization signal block, and a starting symbol of the PDCCH monitoring occasion is symbol 0 of the slot, symbol 1 of the slot, a duration or a symbol length of a CORESET, the duration or the symbol length of the CORESET plus one.

10. The method according to claim 9, **characterized in that** a starting symbol of the PDCCH monitoring occasion is symbol 0 of the slot, symbol 1 of the slot, a duration or a symbol length of a CORESET, the duration or the symbol length of CORESET plus one.

11. The method according to claim 9, **characterized in that** the single synchronization signal block is the first synchronization signal block in the slot or the second synchronization signal block in the slot.

12. The method according to claim 1, **characterized in that** the resource position of the PDCCH monitoring occasion is selected from a beginning of a half slot, wherein said determining a resource position of a PDSCH according to the resource position of the PDCCH monitoring occasion at least comprises:
performing a rate matching on a PDSCH scheduled by one of PDCCH monitoring occasions around the first synchronization signal block, and performing a rate matching on a PDSCH scheduled by another of the PDCCH monitoring occasions around the second synchronization signal block, if the number of PDCCH monitoring occasions is two, one of the PDCCH monitoring occasions is associated with the first synchronization signal block in the slot, the other is associated with the second synchronization signal block in the slot; or
performing a rate matching on a PDSCH scheduled by one of PDCCH monitoring occasions around the first synchronization signal block, and performing a rate matching on a PDSCH scheduled by another of the PDCCH monitoring occasions around the second synchronization signal block, if the number of PDCCH monitoring occasions is two, the slot comprises the two synchronization signal blocks, a starting symbol of one of the two PDCCH monitoring occasions is symbol 0 or symbol 1, and a starting symbol of the other of the two PDCCH monitoring occasion is symbol 6 or symbol 7.

13. The method according to claim 12, **characterized in that** the starting symbol of one of the two PDCCH monitoring occasions is symbol 0 or symbol 1, and the starting symbol of the other of the two PDCCH monitoring occasion is symbol 6 or symbol 7.

14. The method according to claim 1, **characterized in that** the resource position of the PDCCH monitoring occasion is selected from a beginning of a half slot, a duration of a CORESET corresponding to the PDCCH is one symbol, wherein said determining a resource position of a PDSCH according to the resource position of the PDCCH monitoring occasion at least comprises:
determining a starting symbol of a resource occupied by the PDSCH is 1, and a symbol length of the resource occupied by the PDSCH is 2, 3, 4, 5, or 6, if a mapping type of the PDSCH is TypeA;
determining a starting symbol of a resource occupied by the PDSCH is 7, and a symbol length of the resource occupied by the PDSCH is 2, 3, 4, 5, 6, or 7, if a mapping type of the PDSCH is TypeB; or
determining a starting symbol of a resource occupied by the PDSCH is 8, and a symbol length of the resource occupied by the PDSCH is 2, 3, 4, 5, or 6, if a mapping type of the PDSCH is TypeB.

15. The method according to claim 1, **characterized in that** the resource position of the PDCCH monitoring occasion is selected from a beginning of a half slot, a duration or a symbol length of a CORESET corresponding to the PDCCH is one symbol, wherein said determining a resource position of a PDSCH according to the resource position of the PDCCH monitoring occasion at least comprises:
determining a starting symbol of a resource occupied by the PDSCH is 1, and a symbol length of the resource occupied by the PDSCH is 2, 3, 4, 5, or 6, if a mapping type of the PDSCH is TypeA;
determining a starting symbol of a resource occupied by the PDSCH is 7 and a symbol length of the resource occupied by the PDSCH is 2, 3, 4, 5, 6, or 7, if a mapping type of the PDSCH is TypeB and a starting symbol of the PDCCH monitoring occasion is 6; or
determining a starting symbol of a resource occupied by the PDSCH is 8, and a symbol length of the resource occupied by the PDSCH is 2, 3, 4, 5, or 6, if a mapping type of the PDSCH is TypeB and a starting symbol of the PDCCH monitoring occasion is 7.

16. The method according to claim 1, **characterized in that** the resource position of the PDCCH monitoring occasion is selected from a beginning of a half slot, wherein said determining a resource position of a PDSCH according to the resource position of the PDCCH monitoring occasion at least comprises:
determining a starting symbol of a resource occupied by the PDSCH is 1, and a symbol length of the resource occupied by the PDSCH is 2, 3, 4, 5, or 6, if a mapping type of the PDSCH is TypeA and a duration of a CORESET corresponding to the PDCCH is one symbol; or
determining a starting symbol of a resource occupied by the PDSCH is 7, and a symbol length of the resource occupied by the PDSCH is 2, 3, 4, 5, 6, or 7, if a mapping type of the PDSCH is TypeB and a duration of a CORESET corresponding to the PDCCH is one symbol; or
determining a starting symbol of a resource occupied by the PDSCH is 1, and a symbol length of the resource occupied by the PDSCH is 2, 3, 4, or 5, if a mapping type of the PDSCH is TypeA and a duration of a CORESET corresponding to the PDCCH is two symbols; or
determining a starting symbol of a resource occupied by the PDSCH is 8, and a symbol length of the resource occupied by the PDSCH is 2, 3, 4, 5, or 6, if a mapping type of the PDSCH is TypeB and a duration of a CORESET corresponding to the PDCCH is two symbols; or
determining a starting symbol of a resource occupied by the PDSCH is 8, and a symbol length of the resource occupied by the PDSCH is 2, 3, 4, 5, or 6, if a mapping type of the PDSCH is TypeB and a duration of a CORESET corresponding to the PDCCH is one symbol; or
determining a starting symbol of a resource occupied by the PDSCH is 9, and a symbol length of the resource occupied by the PDSCH is 2, 3, 4, or 5, if a mapping type of the PDSCH is TypeB and a duration of a CORESET corresponding to the PDCCH is one symbol.

17. The method according to claim 1, **characterized in that** the resource position of the PDCCH monitoring occasion is selected from a beginning of a half slot, wherein said determining a resource position of a PDSCH according to the resource position of the PDCCH monitoring occasion at least comprises:
determining a starting symbol of a resource occupied by the PDSCH is 1, and a symbol length of the resource occupied by the PDSCH is 2, 3, 4, 5, or 6, if a mapping type of the PDSCH is TypeA; or
determining a starting symbol of a resource occupied by the PDSCH is 7, and a symbol length of the resource occupied by the PDSCH is 2, 3, 4, 5, 6, or 7, if a mapping type of the PDSCH is TypeB, a starting symbol of the PDCCH monitoring occasion is 6, and a duration of a CORESET corresponding to the PDCCH is one symbol; or
determining a starting symbol of a resource occupied by the PDSCH is 8, and a symbol length of the resource occupied by the PDSCH is 2, 3, 4, 5, or 6, if a mapping type of the PDSCH is TypeB, a starting symbol of the PDCCH monitoring occasion is 6, and a duration of a CORESET corresponding to the PDCCH is two symbols; or
determining a starting symbol of a resource occupied by the PDSCH is 8, and a symbol length of the resource occupied by the PDSCH is 2, 3, 4, 5, or 6, if a mapping type of the PDSCH is TypeB, a starting symbol of the PDCCH monitoring occasion is 7, and a duration of a CORESET corresponding to the PDCCH is one symbol; or
determining a starting symbol of a resource occupied by the PDSCH is 9, and a symbol length of the resource occupied by the PDSCH is 2, 3, 4, or 5, if a mapping type of the PDSCH is TypeB, a starting symbol of the PDCCH monitoring occasion is 7, and a duration of a CORESET corresponding to the PDCCH is two symbols.

18. The method according to claim 1, **characterized in that** the PDCCH is a TypeO-PDCCH, a TypeOA-PDCCH, a Type 1-PDCCH or a Type2-PDCCH.

19. The method according to any one of claims 1 to 18, **characterized in that** said determining a resource position of a PDCCH monitoring occasion in a slot comprises:
determining a resource position of the PDCCH monitoring occasion in the slot, according to a physical broadcast channel from a base station.

20. The method according to any one of claims 1 to 18, **characterized in that** said after determining a resource position of a PDCCH monitoring occasion in a slot, further comprises:
indicating to a user equipment, by a physical broadcast channel, the resource position of the PDCCH monitoring occasion in the slot.

21. A device for resource allocation, **characterized by** comprising:
a PDCCH monitoring occasion determination circuitry, configured to determine a resource position of a PDCCH monitoring occasion in a slot, the resource position of the PDCCH monitoring occasion is selected from a beginning of the slot or a beginning of a half slot; and
a PDSCH resource determination circuitry, configured to determine a resource position of a scheduled PDSCH according to the resource position of the PDCCH monitoring occasion at least.

22. A storage medium having computer instructions stored therein is provided, **characterized in that** once the computer instructions are executed, the method based on any one of claims 1 to 20 is performed.

23. A user equipment comprising a memory and a processor, **characterized in that** the memory stores computer instructions capable of being executed on the processor, wherein the processor performs the method according to any one of claims 1 to 19 when the computer instructions are executed by the processor.

24. A base station comprising a memory and a processor, **characterized in that** the memory stores computer instructions capable of being executed on the processor, wherein the processor performs the method according to any one of claims 1 to 18 and claim 20 when the computer instructions are executed by the processor.
